# EUROPEAN PATENT SPECIFICATION

(11) **EP 1 682 329 B1**
(45) Date of publication and mention of the grant of the patent: **02.06.2010**
(21) Application number: 04818412.1
(22) Date of filing: 05.11.2004
(51) Int. Cl.: B29C 49/00, B29C 49/08

(54) **POLYPROPYLENE PROCESSING WITH REDUCED CYCLE TIME IN INJECTION-STRETCH-BLOW MOULDING**
POLYPROPYLENVERARBEITUNG MIT REDUZIERTER ZYKLUSZEIT BEIM SPRITZGIESSSTRECKBLASFORMEN
TRAITEMENT DE POLYPROPYLENE AVEC UN TEMPS DE CYCLE REDUIT DANS L'INJECTION-SOUFFLAGE AVEC BI-ETIRAGE

(30) Priority: 14.11.2003 EP 03104212
(43) Date of publication of application: 26.07.2006
(73) Proprietor: TOTAL PETROCHEMICALS RESEARCH FELUY, 7181 Seneffe (Feluy) (BE)
(72) Inventor: SMITS, Valérie, B-6540 Lobbes (BE)
(74) Representative: Leyder, Francis
(86) International application number: PCT/EP2004/052821
(87) International publication number: WO 2005/046965

(56) References cited:
- WO-A-99/41293
- WO-A-03/040233
- JP-A- 2003 138 074
- US-A1- 2001 048 988
- PATENT ABSTRACTS OF JAPAN vol. 2003, no. 09, 3 September 2003 (2003-09-03) & JP 2003 137245 A (JAPAN POLYCHEM CORP), 14 May 2003 (2003-05-14)

## Description

This invention relates to the field of polypropylene processing in injection-stretch-blow-moulding and discloses the use of metallocene-prepared polypropylene for reducing the cycle time while improving the optical properties of the finished product.

Presently, the most common material used in injection-stretch-blow-moulding is polyethylene terephthalate (PET). It has the advantage of achieving very short cycle time of the order of 1000 to 1500 bottles per cavity per hour and it offers the further advantage of having excellent optical properties. It suffers from the considerable disadvantage of being very costly.

Alternatively other thermoplastic materials such as for example polyvinylchloride (PVC), polystyrene, acrylonitrile, polypropylene and acetals could be used. Among those, polypropylene prepared with a Ziegler-Natta catalyst system has been used with reasonable success. The cycle time, although honorable, is nevertheless higher than that of PET resins and the optical properties, although reasonably good do not reach the level of those obtained with the PET resins.

Prior art document JP-A-2003138074 discloses a medical stretched blow moulded container made of propylene-alpha-olefin copolymer that has good transparency, good stretch blow moulding properties and good hygienic qualities. It is prepared from a composition of metallocene-prepared propylene copolymer and phenolic antioxidant.

Prior art document JP-A-2003137245 discloses an injection-stretched-blow-moulded container having good transparency, good impact resistance and low odour property. It is produced with a metallocene-prepared propylene copolymer.

WO-A-9941293 discloses injection-stretch-blow-moulded containers produced with polymers comprising at least 40 wt%, based on the weight of polymer, of metallocene-prepared homo- or co-polymers of propylene.

There is thus a need to replace the costly PET resins with other resins that will not suffer from the disadvantages of the polypropylene prepared with a Ziegler-Natta catalyst system.

It is an aim of the present invention to provide resins that are processed in injection-stretch-blow-moulding with a very short cycle time.

It is another aim of the present invention to provide resins having excellent optical properties.

It is a further aim of the present invention to provide resins that have a very high rigidity.

It is also an aim of the present invention to provide resins that have an excellent chemical resistance.

It is yet another aim of the present invention to provide articles that can be filled with hot liquids.

It is yet a further aim of the present invention to provide resins that offer good impact and compression properties.

It is also an aim of the present invention to prepare articles having good barrier properties.

Accordingly, the present invention discloses the use of metallocene-produced polypropylene to prepare single layer or multi-layer articles by injection-stretch blow moulding with a reduced cycle time, said articles having excellent optical properties and rigidity.

The present invention discloses the use of an isotactic polypropylene produced with a metallocene catalyst system to prepare articles by injection-stretch blow moulding, said article having excellent optical properties and rigidity and wherein the metallocene catalyst system comprises a metallocene component of formula I

R"ₛ(CpR'ₖ) (C'pR"'ₖ) MQ₂ (I)

wherein (CpR'ₖ) is a substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a C₄-C₆ ring,
wherein (C'pR"'ₖ) is an unsubstituted fluorenyl group,
wherein the substituents on the Cp rings are selected to impart C1 or C2 symmetry to the compound;
wherein R" is a structural bridge between the cyclopentadienyl and the fluorenyl rings to impart stereorigidity that can be a C₁-C₄ alkylene radical, a dialkyl germanium or silicon or siloxane, or a alkyl phosphine or amine radical;
wherein Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other; and
wherein M is a metal Group IVb of the Periodic Table; whereby
that said articles are prepared with a cycle time at least 10 % shorter than that of articles prepared with a Ziegler-Natta catalyst system.

The metallocene-produced polypropylene used in the present invention is preferably an isotactic homopolymer or random copolymer of propylene. It has a melt index of from 2 to 100 g/10 min and preferably of from 10 to 20 g/10 min. The amount of ethylene present in the resin is of from 0 to 10 wt%, preferably of from 0 to 4 wt%.

The melt flow index MFI is measured using the procedures of standard test ISO 1133 at 230 °C for polypropylene resins and under a load of 2.16 kg.

The metallocene component used to prepare the isotactic homopolymer or random copolymer of propylene can be any bridged metallocene known in the art, represented by the general formula I:

R"ₛ (CpR'ₖ) (C'pR"'ₖ) MQ₂ (I)

wherein (CpR'ₖ) is a cyclopentadienyl or substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a C₄-C₆ ring, wherein (C'pR"'ₖ) is a fluorenyl, unsubstituted, and wherein the substituents on the Cp rings are selected to impart C1 or C2 symmetry to the compound; R" is a structural bridge between the Cp and the Flu rings to impart stereorigidity that can be a C₁-C₄ alkylene radical, a dialkyl germanium or silicon or siloxane, or a alkyl phosphine or amine radical; Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other, and M is a metal Group IVb of the Periodic Table. Preferred metals are Zr, Ti, Hf.

(C'pR"'ₖ) is an unsubstituted fluorenyl. Among the preferred metallocenes used in the present invention, one can cite among others isopropylidene-(3-tert-butyl-5-methyl-cyclopentadienyl)(fluorenyl) zirconium dichloride for the production of isotactic random copolymer of propylene.

The metallocene may be supported according to any method known in the art. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

The addition on the support, of an agent that reacts with the support and has an ionising action, creates an active site.

Preferably, alumoxane is used to ionise the catalyst during the polymerisation procedure, and any alumoxane known in the art is suitable.

The preferred alumoxanes comprise oligomeric linear and/or cyclic alkyl alumoxanes represented by the formula : 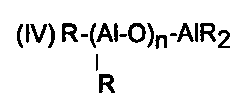 for oligomeric, linear alumoxanes
and 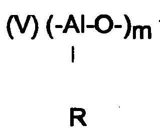 for oligomeric, cyclic alumoxanes,
wherein n is 1-40, preferably 10-20, m is 3-40, preferably 3-20 and R is a C₁-C₈ alkyl group and preferably methyl.

Methylalumoxane is preferably used.

One or more aluminiumalkyl(s) can be used as cocatalyst in the reactor. The aluminiumalkyl is represented by the formula AIR ₓ can be used wherein each R is the same or different and is selected fro m halides or from alkoxy or alkyl groups having from 1 to 12 carbon atoms and x is from 1 to 3. Especially suitable aluminiumalkyl are trialkylaluminium, the most preferred being triisobutylaluminium (TIBAL).

Further, the catalyst may be prepolymerised prior to introducing it in the reaction zone and/or prior to the stabilization of the reaction conditions in the reactor.

The injection-stretch-blow-moulding can be carried out either in a two -step process or in a single step process. The two -step process is generally preferred and it is carried out in two separate locations. It comprises the steps of:
- providing a preform by injection moulding on a multi -cavity mould;
- cooling the preform to room temperature;
- transporting the preform to the blow moulding mac hine;
- reheating the preform in the blow moulding machine in a reflective radiant heat oven;
- passing the heated preform through an equilibrium zone to allow the heat to disperse evenly through the preform wall;
- stretching the preform axially by a centre rod ;
- orienting the stretched preform radially by high pressure air.

In this process, the stretching step is the critical step, as it requires reheating of the preform: optimisation of the preform is thus required. The preform is reheated to a temperature that is about 10 °C lower than the fusion temperature of the resin.

The articles prepared according to the present invention are hollow containers and bottles that can be used in various food and non -food applications. The food applications comprise the storage of water, juicers, oil, flavoured still and carbonated beverages, isotonic drinks, dry products and fresh milk. The non - food applications comprise the storage of cosmetic and pharmaceutical products, dishwashing or washing detergent and dry products.

The bottles and hollow containers prepared according to the present invention have excellent optical properties, very good impact strength. They also have a compression strength that is much larger than both the bottles prepared with PET resins and conventional polypropylene resins prepared with Ziegler -Natta catalyst system.

The cycle time for preparing the articles according to the present invention is substantially shorter than that necessary with Ziegler -Natta (ZN) polypropylene: it is at least 10% shorter, preferably 15 % shorter than the cycle time of ZN resins. It is comparable to that of PET resins. The use of metallocene catalyst systems allows the production of polypropylene resins having a low fusion point, while keeping good mechanical properties of strength, compression and impact, as well as improved optical properties. The rigidity of the finished articles is increased by at least 3% with respect to that of ZN -prepared articles and by at least 20 % with respect to that of PET -prepared articles. The optical properties are equivalent to those of PET -prepared articles and the haze is improved by at least 40 % with respect to that of articles prepared with a ZN catalyst system.

### Examples.

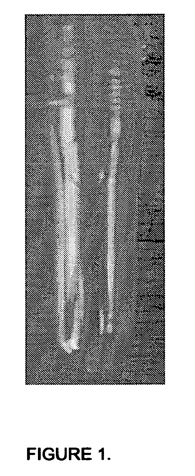

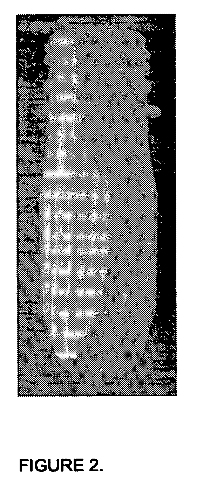

Two preform designs were used in the examples:
- Design 1 was the commercial polyethylene terephthalate (PET) preform design used for the preparation of bottles: it had a weight of 20 g and it is represented in Figure 1.
- Design 2 was the Bekum PP preform design used for the preparation of bottles: it had a weight of 23.8 g and it is represented in Figure 2.

Three preforms were prepared:
- P1 was prepared from a commercial PET resin R1 with design 1.
- P2 was prepared from a metallocene -produced polypropylene resin R2 with Design 2.
- P3 was prepared from a Ziegler-Natta polypropylene resin R3 with Design 2.

Resin R2, according to the present invention was a metallocene -prepared random copolymer of propylene and ethylene prepared with a metallocene catalyst system comprising a bridged (3 -tBu-5Me-cyclopentadienyl)(fluorenyl) zirconium dichloride component and an activating agent. It had an MFI of 14g/10 min.

Resin R3 was a classical commercial Ziegler -Natta random copolymer of propylene having a MFI of 10 g/10 min and sold under the commercial name of PPR7220 (previously called PPR3100MT3).

Preform P1 was purchased.

Preforms P2 and P3 were produced on a Synergy 100 injection moulding machine having a 100 tons clamping force and a maximum injection pressure of 1750 bars. The screw had a length L over diameter D ratio UD of 20, a diameter D of 45 mm, a compression ratio of 1:2 and it was equipped with two cavity moulds.

The moulding conditions for preparing preforms P2 and P3 are summarised in Table I.

**TABLE I.**

| | | units | P2 | P3 |
|---|---|---|---|---|
| plasticising | screw rotation speed | rpm | 100 | 100 |
| | back pressure | bar | 50 | 50 |
| | set melt temperature | °C | 211 | 211 |
| | dosing time | s | 4.22 | 4.02 |
| injection | injection time | s | 2.12 | 2.69 |
| | maximum injection pressure | bar | 435 | 435 |
| | pressure at switch -over | bar | 426 | 426 |
| holding | cushion | mm | 2.6 | 3 |
| | switch-over point | mm | 4.4 | 4.3 |
| | holding pressure | bar | 359 | 359 |
| | holding time | s | 8.5 | 6.29 |

Each preform was then used to prepare 0.5 I bottles on a two -cavity linear injection-stretch-blow-moulding (ISBM) machine ADS G62.

These bottles were tested for cycle time, optical an d mechanical properties and the results are displayed in Table II.

Bottles B1 to B3 were prepared respectively from preforms P1 to P3 and bottle B4 was a commercial Vittel bottle.

**TABLE II.**

| Bottle | Cycle time (b/h/cavity) | Rigidity (N) | Impact drop height (m) | Optical properties (%) | Visual transparency |
|---|---|---|---|---|---|
| B1 | 1500 | 120 | >6 m | 9.8 | + |
| B2 | 1375 | 165 | >6 m | 10.3 | + |
| B3 | 1250 | 160 | >6 m | 15.7 | - |
| B4 | n.a. | 100 | >6 m | n.m. | + |

| | | | | | |
|---|---|---|---|---|---|
| n.a. means: not available, n.m. means: not measured. | | | | | |

The compression test used to measure the rigidity followed the method of standard test ASTM 2659 -95 on a Zwich tensile machine operated at a velocity of 10 mm/min.

The impact drop strength was measured by a drop test developed in house and based upon a UN norm and standard test ASTM 2463 -95. The bottles were filled at 95 % with water and conditioned at room temperature (about 25 °C) for 48 hours and then were dropped on the bottom from increasing heights. The height was increased stepwise until rupture occurred. In the present test, the maximum drop heig ht of 6 metres that could be measured with the equipment was reached without recording any ruptures.

The haze was measured following the methods of standard test ISO 14782 but it must be noted that the bottle design is not suitable for recording reliable and reproducible measurements. The same remark applies to the optical properties that are indicative in the present examples.

## Claims

1. Use of an isotactic polypropylene produced with a metallocene catalyst system to prepare articles by injection-stretch blow moulding, said articleS" having excellent optical properties and rigidity and wherein the metallocene catalyst system comprises a metallocene component of formula I
R"ₛ(CpR'ₖ) (C'pR"'ₖ) MQ₂ (I)
wherein (CpR'ₖ) is a substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a C₄-C₆ ring,
wherein (C'pR"'ₖ) is an unsubstituted fluorenyl group,
wherein the substituents on the Cp rings are selected to impart C1 or C2 symmetry to the compound;
wherein R" is a structural bridge between the cyclopentadienyl and the fluorenyl rings to impart stereorigidity that can be a C₁-C₄ alkylene radical, a dialkyl germanium or silicon or siloxane, or a alkyl phosphine or amine radical;
wherein Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other; and
wherein M is a metal Group IVb of the Periodic Table; whereby
said articles are prepared with a cycle time at least 10 % shorter than that of articles prepared with a Ziegler-Natta catalyst system.

2. The use according to claim 1 in order to increase the rigidity of said articles by at least 3 % with respect to that of articles prepared with a Ziegler-Natta catalyst system and by at least 20 % with respect to similar articles prepared with PET.

3. The use according to claim 1 or claim 2 in order to reduce the haze by at least 40 % with respect to that of articles prepared with a Ziegler-Natta catalyst system.

4. The use of any one of claims 1 to 3 wherein the isotactic polypropylene is an isotactic homopolymer or an isotactic random copolymer of propylene having a melt index MI2 of from 2 to 100 g/10 min and an amount of ethylene of from 0 to 10 wt%.

5. The use of any one of the preceding claims wherein the metallocene catalyst component used to prepare the resin is isopropylidene-(3-tert-butyl-5-methyl-cyclopentadienyl)(fluorenyl) zirconium dichloride.

6. The use of any one of the preceding claims to prepare single-layer articles.

7. The use of any one of claims 1 to 5 to prepare multi-layer articles.

8. The use according to any one of the preceding claims for food applications.

9. The use according to any one of the preceding claims for non-food applications.

## Patentansprüche

1. Verwendung eines mit einem Metallocenkatalysatorsystem produzierten isotaktischen Polypropylens zur Herstellung von Artikeln durch Spritzstreckblasformen, wobei die Artikel ausgezeichnete optische Eigenschaften und Steifigkeit aufweisen und wobei das Metallocenkatalysatorsystem eine Metallocenkomponente umfasst mit der Formel I
R"ₛ (CpR'ₖ) (C'pR"'ₖ) MQ₂ (I)
wobei (CpR'ₖ) ein substituiertes Cyclopentadienyl ist, jedes R' das gleiche oder verschieden ist und Wasserstoff oder ein Kohlenwasserstoffrest ist, wie etwa Alkyl-, Alkenyl-, Aryl-, Alkylaryl- oder Arylalkylrest, der 1 bis 20 Kohlenstoffe enthält, oder zwei Kohlenstoffatome miteinander verbunden sind, um einen C₄-C₆-Ring zu bilden,
wobei (C'pR"'ₖ) eine unsubstituierte Fluorenylgruppe ist,
wobei die Substituenten an den Cp-Ringen ausgewählt sind, um der Verbindung C1- oder C2-Symmetrie zu verleihen;
wobei R" eine Strukturbrücke zwischen den Cyclopentadienyl- und den Fluorenylringen zur Verleihung von Stereosteifigkeit ist, die ein C₁-C4-Alkylenrest, ein Dialkylgermanium- oder Silizium- oder Siloxan-, oder ein Alkylphosphin- oder Aminrest sein kann;
wobei Q ein Kohlenwasserstoffrest, wie etwa Aryl-, Alkyl-, Alkenyl-, Alkylaryl- oder Arylalkylrest mit 1-20 Kohlenstoffatomen, Hydrocarboxyrest mit 1-20 Kohlenstoffatomen oder Halogen ist und das gleiche oder verschieden voneinander sein kann; und
wobei M ein Metall der Gruppe IVb des Periodensystems der Elemente ist; wobei besagte Artikel mit einer Zykluszeit hergestellt werden, die mindestens 10% kürzer ist als diejenige von Artikeln, die mit einem Ziegler-Natta-Katalysatorsystem hergestellt sind.

2. Verwendung nach Anspruch 1, um die Steifigkeit besagter Artikel in Bezug auf diejenige von Artikeln, die mit einem Ziegler-Natta-Katalysatorsystem hergestellt sind, um mindestens 3% zu erhöhen, und um mindestens 20% in Bezug auf gleichartige Artikel, die mit PET hergestellt sind.

3. Verwendung nach Anspruch 1 oder Anspruch 2, um die Trübung in Bezug auf diejenige von Artikeln, die mit einem Ziegler-Natta-Katalysatorsystem hergestellt sind, um mindestens 40% zu reduzieren.

4. Verwendung nach einem der Ansprüche 1 bis 3, wobei das isotaktische Polypropylen ein isotaktisches Homopolymer oder ein isotaktisches statistisches Copolymer von Propylen mit einem Schmelzindex MI2 von 2 bis 100 g/10 min und einem Ethylengehalt von 0 bis 10 Gew.% ist.

5. Verwendung nach einem der vorgenannten Ansprüche, wobei die zur Herstellung des Harzes verwendete Metallocenkatalysatorkomponente Isopropyliden-(3-tert-butyl-5-methyl-cyclopentadienyl)(fluorenyl)zirkoniumdichlorid ist.

6. Verwendung nach einem der vorgenannten Ansprüche zur Herstellung einlagiger Artikel.

7. Verwendung nach einem der Ansprüche 1 bis 5 zur Herstellung mehrlagiger Artikel.

8. Verwendung nach einem der vorgenannten Ansprüche für Lebensmittelanwendungen.

9. Verwendung nach einem der vorgenannten Ansprüche für Nicht-Lebensmittelanwendungen.

## Revendications

1. Utilisation d'un polypropylène isotactique que l'on obtient avec un système de catalyseur de métallocènes pour préparer des articles par moulage par injection-soufflage et étirage, lesdits articles possédant des propriétés optiques excellentes et une rigidité excellente, et dans laquelle le système de catalyseur de métallocène comprend un composant de métallocène répondant à la formule (I) :
R"ₛ (CPR'ₖ)(C'PR"'ₖ) MQ₂ (I)
dans laquelle (CₚR'ₖ) représente un groupe cyclopentadiényle substitué, chaque radical R' est identique ou différent et représente un atome d'hydrogène ou un radical hydrocarbyle tel qu'un radical alkyle, un radical alcényle, un radical aryle, un radical alkylaryle ou un radical arylalkyle contenant de 1 à 20 atomes de carbone, ou bien deux atomes de carbone sont joints l'un à l'autre pour former un noyau en C₄-C₆ ;
dans laquelle (CₚR"'ₖ) représente un groupe fluorényle non substitué ;
dans laquelle les substituants sur les noyaux Cp sont choisis pour conférer une symétrie en C₁ ou en C₂ au composé ;
dans laquelle R" représente un pont de structure entre le groupe cyclopentadiényle et les noyaux fluorényle pour conférer une stéréorigidité qui peut représenter un radical alkylène en C₁-C₄, un dialkylgermanium ou un atome de silicium ou un groupe siloxane, ou bien un radical alkylphosphine ou un radical amine ;
dans laquelle Q représente un radical hydrocarbyle tel qu'un radical aryle, un radical alkyle, un radical alcényle, un radical alkylaryle ou un radical arylalkyle contenant de 1 à 20 atomes de carbone, un radical hydrocarboxyle contenant de 1 à 20 atomes de carbone ou un atome d'halogène, et peuvent être identiques ou différents l'un de l'autre ; et
dans laquelle M représente un métal du groupe IVb du tableau périodique ;
lesdits articles étant préparés avec un cycle plus court à concurrence d'au moins 10 % que celui d'articles préparés avec un système de catalyseur de type Ziegler-Natta.

2. Utilisation selon la revendication 1, pour augmenter la rigidité desdits articles à concurrence d'au moins 3 % par rapport à celle d'articles préparés avec un système de catalyseur de type Ziegler-Natta et à concurrence d'au moins 20 % par rapport à des articles similaires préparés avec du PET.

3. Utilisation selon la revendication 1 ou 2, pour réduire le trouble à concurrence d'au moins 40 % par rapport à celui d'articles préparés avec un système de catalyseur de type Ziegler-Natta.

4. Utilisation selon l'une quelconque des revendications 1 à 3, dans laquelle le polypropylène isotactique est un homopolymère isotactique ou un copolymère statistique isotactique de propylène possédant un indice de fluidité à chaud MI2 de 2 à 100 g/10 minutes et une quantité d'éthylène de 0 à 10 % en poids.

5. Utilisation selon l'une quelconque des revendications précédentes, dans laquelle le composant de catalyseur de métallocène que l'on utilise pour préparer la résine est le dichlorure d'isopropylidène-3-tert-butyl-5-méthyl-cyclopentadiényl)(fluorényl) zirconium.

6. Utilisation selon l'une quelconque des revendications précédentes, pour préparer des articles monocouches.

7. Utilisation selon l'une quelconque des revendications 1 à 5, pour préparer des articles multicouches.

8. Utilisation selon l'une quelconque des revendications précédentes, pour des applications alimentaires.

9. Utilisation selon l'une quelconque des revendications précédentes, pour des applications non alimentaires.
